# EUROPEAN PATENT APPLICATION

(11) **EP 4 717 556 A1**
(43) Date of publication of application: **01.04.2026**
(21) Application number: 24213926.9
(22) Date of filing: 19.11.2024
(51) Int. Cl.: B62B 3/00, B62B 3/02, B62B 5/06

(54) **FOLDING EXPANSION TRAILER**

(30) Priority: 30.09.2024 CN 202411381076
(71) Applicant: Jinhua Mutao Leisure Products Co., Ltd., Jinhua Zhejiang (CN)
(72) Inventor: Huang, Junpeng, Jinhua City, Zhejiang Province (CN)
(74) Representative: Cabinet Chaillot

(57) **Abstract**

A folding expansion trailer comprises a front frame, a rear frame, side folding components, a bottom support component and an expansion component, wherein upright rods are respectively arranged on the front frame and rear frame, sliding sleeves are arranged on the upright rods; each side folding component comprises a plurality of X-shaped cross articulation pieces which are sequentially articulated; the bottom support component comprises a front bottom frame, a rear bottom frame and a limiting piece, the front bottom frame is hinged with the rear bottom frame, and the limiting piece is used for supporting and limiting the front bottom frame and the rear bottom frame; the expansion component comprises an expansion frame and connecting rod mechanisms, the expansion frame is hinged with two rear upright rods, and sliding sleeves on the rear upright rods drive the expansion frame to rotate via the connecting rod mechanism.

## Description

### 1. Technical Field

The invention belongs to the technical field of trailers, specifically relates to a folding expansion trailer.

### 2. Background Art

In outdoor activities or camping, it is often necessary to use a trailer to carry luggage or goods, etc. This kind of trailer is widely used in carrying things because of its easy to push and time-saving features. In order to facilitate the storage of the trailer, this kind of outdoor trailer is generally folding design, and in order to avoid increase of the volume of the trailer after folding, the current trailer products usually require that the height of the trailer remains unchanged before and after folding.

However, there is still a great demand for large-capacity trailers, so in the case where the height of the trailer remains unchanged before and after folding, how to optimize the folding structure of the trailer so as to make the trailer have a larger capacity, and to make the folding process smooth and convenient for the user to use is a problem that needs to be solved urgently in this field.

### 3. Summary of the Invention

The invention sims to solve at least one problem in prior art. Therefore, the purpose of the invention is to provide a folding expansion trailer.

The technical solution provided by the invention is as follows: a folding expansion trailer, comprising
a front frame and a rear frame, wherein the front frame and rear frame are respectively provided with two upright rods distributed at intervals, one at left and another one at right, four upright rods are distributed in a rectangle and each upright rod is equipped with a sliding sleeve that can be slid up and down; the upright rods on the front frame are front upright rods, while the upright rods on the rear frame are rear upright rods;
side folding components, and each side folding component is connected between the front upright rod and rear upright rod at same side; each side folding component comprises a plurality of X-shaped cross articulation pieces which are sequentially articulated in a front-to-back direction, wherein one of the upper and lower ends of the first and last X-shaped cross articulation pieces is hingedly connected to an adjacent upright rod, and another end is hingedly connected to a sliding sleeve on the upright rod herein;
a bottom support component, and the bottom support component comprises a front bottom frame, a rear bottom frame and a limiting piece; the front bottom frame is hinged to a bottom of the front frame and the rear bottom frame is hinged to a bottom of the rear frame, the front bottom frame is hinged with the rear bottom frame, and the limiting piece is used for supporting and limiting the front bottom frame and the rear bottom frame when the front bottom frame and the rear bottom frame are unfolded downward;
an expansion component, and the expansion component comprises an expansion frame and connecting rod mechanisms, the expansion frame is an open ring-shaped frame with an opening forward, left and right ends of the expansion frame are hingedly connected to two rear upright rods respectively, the connecting rod mechanism is connected to the expansion frame and the sliding sleeve on the rear upright rod respectively, the connecting rod mechanisms are used to synchronously push and pull the expansion frame to unfold upwardly or to fold downwardly when the sliding sleeve on the rear upright rod slides upwardly or downwardly.

Preferably, each connecting rod mechanism comprises a first support rod, a second support rod and a third support rod; one end of the first support rod is hinged to the sliding sleeve on the rear upright rod and another end is hinged rearwardly to a lower end of the second support rod, an upper end of the second support rod is hinged to the expansion frame, and a lower end of the third support rod is hinged to a lower end of the rear upright rod and an upper end thereof is hinged to the first support rod.

Preferably, the second support rod is provided with a baffle plate for limiting the expansion frame when the expansion frame is folded downwards.

Preferably, the limiting piece is a U-shaped hanging rod; the front bottom frame is hinged to the bottom of the front frame, the rear bottom frame is hinged to the bottom of the rear frame, the front bottom frame and the rear bottom frame are hingedly connected to and supported on an upwardly opening U-shaped hanging rod, and left and right ends of the U-shaped hanging rod are hinged upwardly to their respective neighboring X-shaped cross articulation piece.

Preferably, the left and right ends of the U-shaped hanging rod are hinged to a hinge center of the respective X-shaped cross articulation piece directly above them.

Preferably, the limiting piece comprises a front hinge base and a rear hinge base; the front hinge base is provided at a rear end of the front bottom frame, the rear hinge base is provided at a front end of the rear bottom frame, at a bottom of the front hinge base and the rear hinge base is provided with a connecting lug respectively, and two connecting lugs are hingedly connected;

When the front bottom frame and the rear bottom frame are unfolded downwardly and laid flat, a rear end of the front hinge base and a front end of the rear hinge base are abutted against each other.

Preferably, the front bottom frame and the rear bottom frame are provided with a plurality of load-bearing rods, wherein a plurality of load-bearing rods on the front bottom frame and the rear bottom frame are crisscrossed so as to cause the front bottom frame and the rear bottom frame to form a grid frame.

Preferably, the front frame is provided with a vertically retractable puller, wherein a bottom of the puller is hingedly connected to the front frame, the front frame is provided with a ferrule with an opening at a front side, and the puller is vertically stuck in the ferrule.

Preferably, tops of two front upright rods are connected to a horizontal stopper bar, and the stopper bar is abutted against a rear of the handle when the puller is stuck within the ferrule.

Preferably, wheels are provided at bottoms of the front frame and rear frame respectively.

Compared with the prior art, the invention has the following advantages:
1. the side folding components, bottom support component and expansion component in the trailer can be folded, but folding of the three components are not isolated, but linked to each other, and the trailer as a whole is a linkage structure, the significance of which is that as long as one of the components acts, other components will follow the movement, so that it can greatly improve the smoothness in the entire trailer folding and unfolding process, and is convenient for users to use;
2. in the folding process of the trailer, the front and rear frames as well as front and rear upright rods will not fold, but to approach each other converge toward center, so the size of the components in the side folding components, bottom support component and expansion component are designed in advance, so that the components are not higher than the upright rods in the folding process, and can ensure that the height of the trailer is same before and after it is folded, to facilitate storage of the trailer;
3. the trailer is mainly equipped with an expansion component at the rear frame, which can increase the unfolding length of the trailer without changing the width of the trailer, thus effectively improving the capacity of the trailer, and can meet the user's large-capacity demand.

Additional aspects and advantages of the invention will be given, in part, as will become apparent from the following description, or as will be learned through the practice of the invention.

### 4. Brief Description of Accompany Drawings

In order to illustrate the preferred embodiment of the invention or the technical scheme more clearly, the technical scheme of the preferred embodiment or the drawings required by the prior art is further described briefly. Obviously, only partial embodiments of the invention are shown and the actual structure is not limited thereto. It is to be understood by those skilled in the art that other drawings can be obtained based on the drawings of the invention with non-creative labor.
FIG. 1 is a front side three-dimensional view of embodiment 1 of the invention;
FIG. 2 is a right view of embodiment 1 of the invention after loading a trailer pocket;
FIG. 3 is a rear side three-dimensional view of embodiment 1 of the invention;
FIG. 4 is a top view of embodiment 1 of the invention;
FIG. 5 is a front view of embodiment 1 of the invention;
FIG. 6 is a schematic diagram of an unfolded state of embodiment 1 of the invention;
FIG. 7 is a schematic diagram of a semi-folded state of embodiment 1 of the invention;
FIG. 8 is a schematic diagram of a fully folded state of embodiment 1 of the invention;
FIG. 9 is a front view of embodiment 2 of the invention;
FIG. 10 is a schematic diagram of the folding process of embodiment 2 of the invention.

As shown in the accompanying drawings:
1 front frame, 11 front upright rod, 12 ferrule,
2 rear frame, 21 rear upright rod
3 sliding sleeve,
4 side folding component, 41 X-shaped cross articulation piece
5 bottom support component, 51 front bottom frame, 52 rear bottom frame, 53 U-shaped hanging rod, 54 load-bearing rod, 55 front hinge base, 56 rear hinge base, 57 connecting lug,
6 expansion component, 61 expansion frame, 62 first support rod, 63 second support rod, 64 third support rod, 65 baffle plate;
7 fixing sleeve,
8 puller,
9 stopper bar,
10 wheel, 101 universal wheel, 102 directional wheel.

### 5. Specific Embodiment of the invention

In order to make the objects, technical solutions and advantages of the embodiments of the present invention clearer, the technical solutions in the embodiments of the invention will be clearly and completely described below with reference to the drawings in the embodiments of the invention, and it is obvious that the described embodiments are some, but not all, embodiments of the invention. The components of embodiments of the invention generally described and illustrated in the FIG.s herein may be arranged and designed in a wide variety of different configurations.

Embodiments of the invention are described in detail below, examples of which are shown in the accompanying drawings, wherein the same or similar symbols throughout denote the same or similar elements or elements having the same or similar functions. In the description of the invention, it is to be understood that the terms "top", "bottom", "front", "back", "left", "right", "inner", "outer", "vertical ", "circumferential", "radial", "axial" and the like indicate orientation or positional relationships based on those shown in the accompanying drawings, only for the purpose of facilitating the description of the invention and simplifying the description, and are not intended to indicate or imply that the device or element referred to must have a particular orientation, be constructed and operated in a particular orientation, and therefore are not to be construed as limitations of the present invention.

In the description of the invention, "first feature", "second feature" may include one or more such features. Furthermore, the terms "first" and "second" are used only for descriptive purposes and are not to be understood as indicating or implying relative importance or implicitly specifying the number of technical features indicated. Thus, a feature defined with the terms "first" and "second" may expressly or implicitly include one or more such features.

In the description of the embodiments of the invention, it should be further noted that unless otherwise explicitly stated or limited, the terms "arranged", "mounted", and "connected" should be interpreted broadly, and may be, for example, fixedly connected, detachably connected, or integrally connected; can be mechanically or electrically connected; they may be connected directly or indirectly through intervening media, or they may be interconnected between two elements. The specific meanings of the above terms in the invention can be understood by those skilled in the art according to specific situations.

In the invention, the hinging of two parts A and B may be that each of A and B is provided with a pivot hole, and then the hinging of the two can be realized by using a pin to pass through two pivot holes, which is a simple and easy-to-use hinging method that is easy to realize.

### Embodiment 1

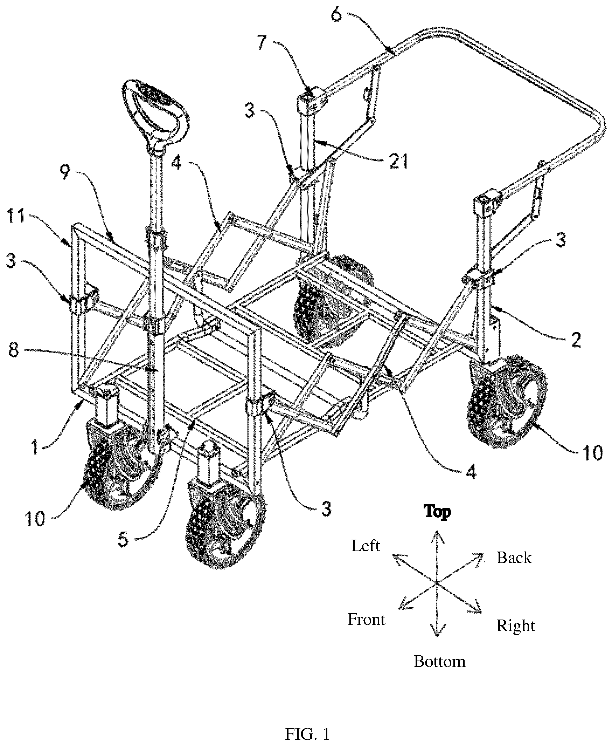

A folding expansion trailer as shown from FIG. 1 to FIG. 5 comprises a front frame 1, a rear frame 2, side folding components 4, a bottom support component 5, and an expansion component 6.

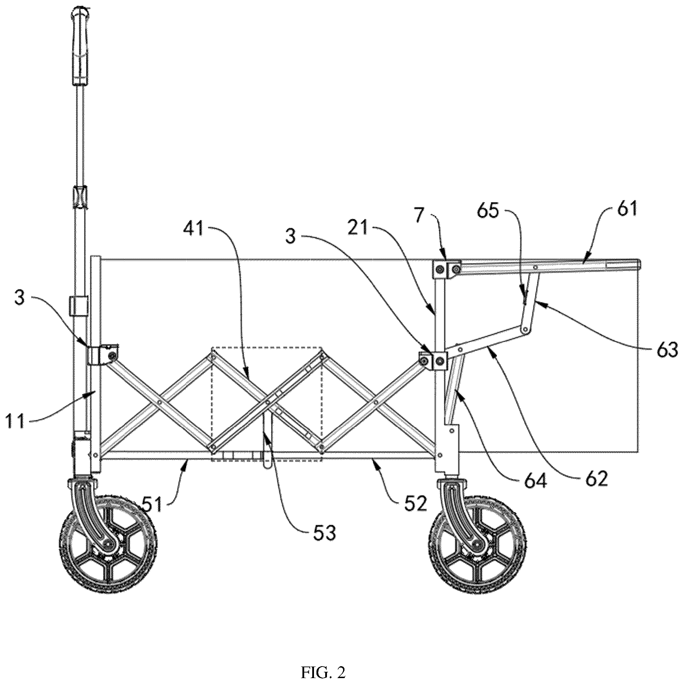

As shown in FIG. 1 and FIG. 2, the front frame 1 and rear frame 2 are respectively provided with two upright rods distributed at intervals, one at left and another one at right, four upright rods are distributed in a rectangle and each upright rod is equipped with a sliding sleeve 3 that can be slid up and down; the upright rods on the front frame 1 are front upright rods 11, while the upright rods on the rear frame 2 are rear upright rods 21.

Specifically, there are four vertical upright rods in the trailer, which serve as supporting skeleton of the trailer, and the four upright rods are distributed at four vertices of the rectangle so as to define a substantially rectangular body when unfolded for use.

Further, wheels 10 are provided at bottoms of the front frame 1 and rear frame 2 respectively, wherein the wheels 10 of the front frame 1 are universal wheels 101 and the wheels 10 of the rear frame 2 are directional wheels 102.

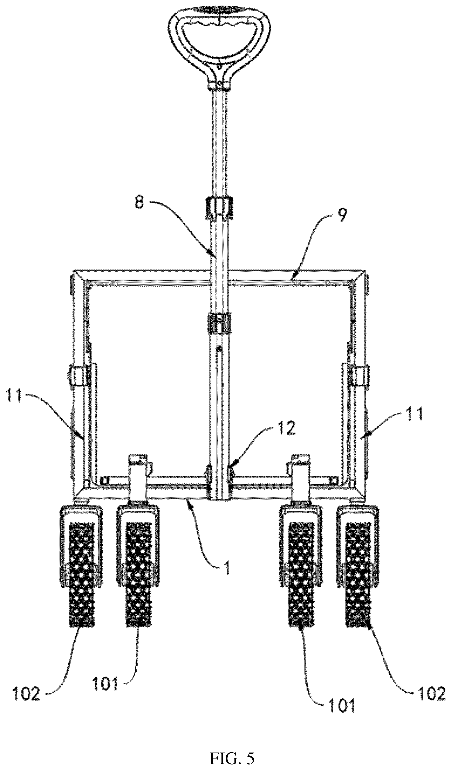

As shown in FIG. 1 and FIG. 5, the front frame 1 is provided with a vertically retractable puller 8, which is convenient for the user to pull the trailer to move. The puller 8 can be a multi-section telescopic puller 8, and this telescopic puller 8 structure is widely used in the prior art, including but not limited to a variety of suitcases, and can be selected according to the needs.

A bottom of the puller 8 is hingedly connected to the front frame 1, the front frame 1 is provided with a ferrule 12 with an opening at a front side, and the puller 8 is vertically stuck in the ferrule 12; the open ferrule 12 is used to fix the puller 8 when the trailer is not being pulled, and subsequently the puller 8 can be turned forward to separate the puller 8 from the ferrule 12 to pull the trailer away. Tops of two front upright rods 11 are connected to a horizontal stopper bar 9, and the stopper bar 9 is abutted against a rear of the handle when the puller 8 is stuck within the ferrule 12 to play the role of limiting.

As shown in FIG. 1 and FIG. 2, side folding components 4 are provided on left and right sides of the trailer respectively, and each side folding component 4 is connected between the front upright rod 11 and rear upright rod 21 at same side; each side folding component 4 comprises a plurality of X-shaped cross articulation pieces 41 which are sequentially articulated in a front-to-back direction, wherein one of the upper and lower ends of the first and last X-shaped cross articulation pieces 41 is hingedly connected to an adjacent upright rod, and another end is hingedly connected to a sliding sleeve 3 on the upright rod herein;

For instance, in the embodiment 1 illustrated from FIG. 1 to FIG. 5, a lower end of a foremost X-shaped cross articulation piece 41 of the folding component 4 on same side is hinged to a lower end of the front upright rod 11 and whose upper end is hinged to the sliding sleeve 3 on the front upright rod 11, and a lower end of a rearmost X-shaped cross articulation piece 41 is hinged to a lower end of the rear upright rod 21 and whose upper end is hinged to the sliding sleeve 3 on the rear upright rod 21.

The X-shaped cross articulation piece 41 herein refers to a component consisting of two cross-articulated connecting rods. The embodiment does not limit the number of X-shaped cross articulation pieces 41 in the side folding components 4, and the person skilled in the art may increase or decrease the number of X-shaped cross articulation pieces 41 according to the demand in order to adjust the unfolded length of the trailer.

As shown in FIG. 2, FIG. 3 and FIG. 4, the bottom support component 5 comprises a front bottom frame 51, a rear bottom frame 52 and a limiting piece; the front bottom frame 51 is hinged to a bottom of the front frame 1 and the rear bottom frame 52 is hinged to a bottom of the rear frame 2, the front bottom frame 51 is hinged with the rear bottom frame 52.

The limiting piece is used for supporting and limiting the front bottom frame 51 and the rear bottom frame 52 when the front bottom frame 51 and the rear bottom frame 52 are unfolded downward; in this case, the front bottom frame 51 and the rear bottom frame 52 cannot continue to rotate downward, and then the loading function can be played.

In embodiment 1, the limiting piece is a U-shaped hanging rod 53; the front bottom frame 51 is hinged to the bottom of the front frame 1, the rear bottom frame 52 is hinged to the bottom of the rear frame 2, the front bottom frame 51 and the rear bottom frame 52 are hingedly connected to and supported on an upwardly opening U-shaped hanging rod 53, and left and right ends of the U-shaped hanging rod 53 are hinged upwardly to their respective neighboring X-shaped cross articulation piece 41.

That is, the U-shaped hanging rod 53 is connected to the X-shaped cross articulation piece 41 in an upwardly proximate manner, with the left end of the U-shaped hanging rod 53 hinged upwardly to the X-shaped cross articulation piece 41 proximate the U-shaped hanging rod 53 in the left side folding component 4, and the right end of the U-shaped hanging rod 53 hinged upwardly to the X-shaped cross articulation piece 41 proximate the U-shaped hanging rod 53 in the right side folding component 4. For ease of installation, the left and right ends of the U-shaped hanging rod 53 are hinged to a hinge center of the respective X-shaped cross articulation piece 41 directly above them.

Specifically, the U-shaped hanging rod 53 is provided primarily for pulling the front bottom frame 51 and the rear bottom frame 52, thereby enabling the front bottom frame 51 and the rear bottom frame 52 to play the loading function when the trailer is unfolded for use. In addition, the front bottom frame 51 and the rear bottom frame 52 are only supported on the U-shaped hanging rod 53, so that when the front bottom frame 51 and the rear bottom frame 52 are turned upwardly and folded, they can be separated from the U-shaped hanging rod 53, and since the U-shaped hanging rod 53 is articulated with the X-shaped cross articulation piece 41 thereon, the U-shaped hanging rod 53 will not interfere with the folding of the front bottom frame 51 and the rear bottom frame 52, as well as the folding of the X-shaped cross articulation piece 41.

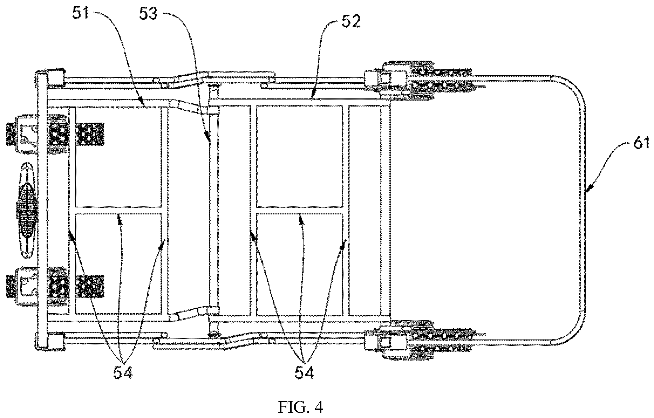

In order to ensure that the front bottom frame 51 and the rear bottom frame 52 have a good ability to carry heavy objects, as shown in FIG. 1 and FIG. 4, the front bottom frame 51 and the rear bottom frame 52 are provided with a plurality of load-bearing rods 54. In the specific setting, load-bearing rods 54 include horizontal rods and longitudinal rods, and the horizontal rods and longitudinal rods are connected in a criss-crossed manner, so as to enable the front bottom frame 51 and the rear bottom frame 52 to form a grid frame structure, which is convenient for bearing loads.

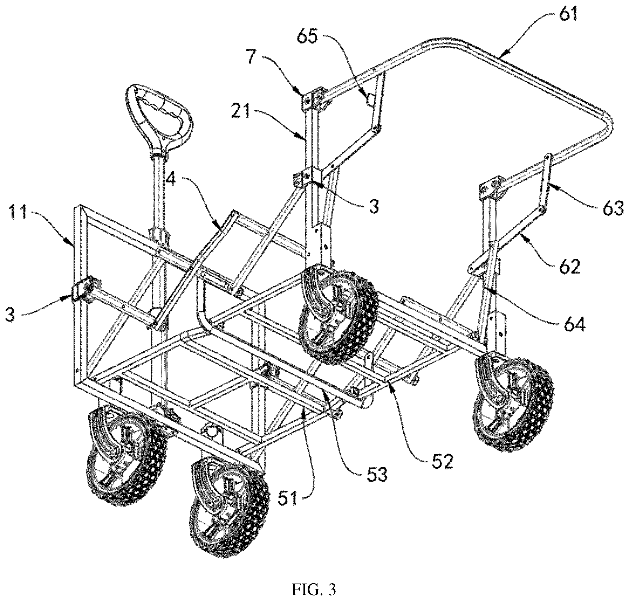

As shown in FIG. 2 and FIG. 3, the expansion component 6 comprises an expansion frame 61 and connecting rod mechanisms, the expansion frame 61 is an open ring-shaped frame with an opening forward, left and right ends of the expansion frame 61 are hingedly connected to two rear upright rods 21 respectively, the connecting rod mechanism is connected to the expansion frame 61 and the sliding sleeve 3 on the rear upright rod 21 respectively.

In specific arrangement, a fixing sleeve 7 is provided at a top of the rear upright rod 21, and the expansion frame 61 is hingedly connected to the fixing sleeve 7. Each of the rear upright rod 21 is provided with a connecting rod mechanism, and each connecting rod mechanism comprises a first support rod 62, a second support rod 63 and a third support rod 64; one end of the first support rod 62 is hinged to the sliding sleeve 3 on the rear upright rod 21 and another end is hinged rearwardly to a lower end of the second support rod 63, an upper end of the second support rod 63 is hinged to the expansion frame 61, and a lower end of the third support rod 64 is hinged to a lower end of the rear upright rod 21 and an upper end thereof is hinged to the first support rod 62. Accordingly, the connecting rod mechanisms are used to synchronously push and pull the expansion frame 61 to unfold upwardly or to fold downwardly when the sliding sleeve 3 on the rear upright rod 21 slides upwardly or downwardly.

The expansion component 6 is set up to add a foldable expansion frame 61 primarily at a rear of the trailer, which can increase the unfolding length of the trailer without changing the width of the trailer, thus effectively improving the capacity of the trailer, and can meet the user's large-capacity demand. As shown in FIG. 2, when the expansion component 6 is provided, this trailer can be synchronously provided with a detachable large-capacity trailer pocket for easy loading and use.

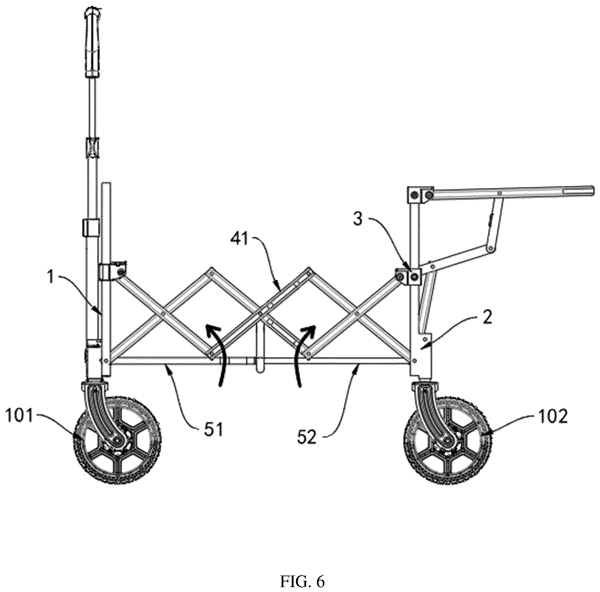

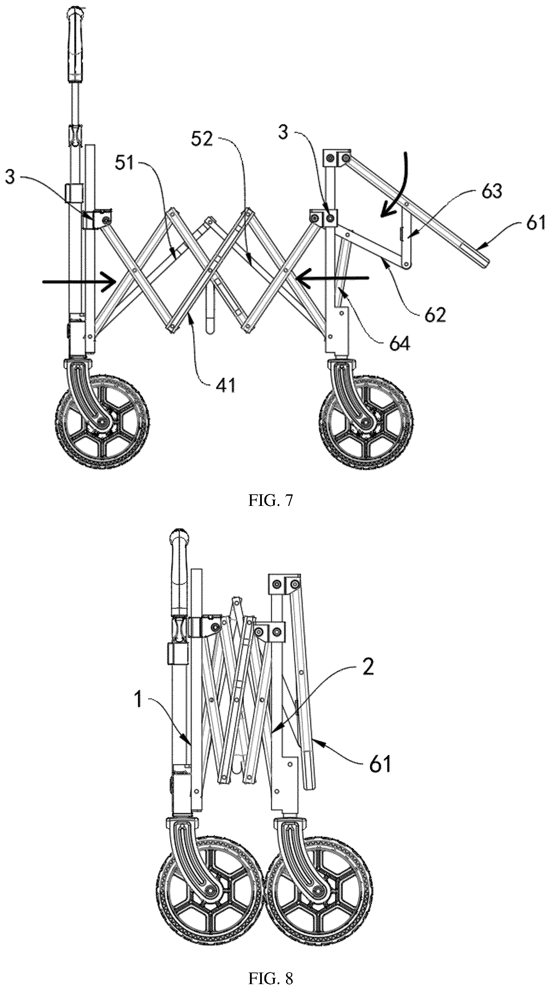

The folding process of the invention is as follows:
S1. as shown in FIG. 6, it is the unfolded use state of the trailer, when the trailer turned from unfolded state into folded state, as shown in FIG. 7, it is first necessary to fold upward to lift the front bottom frame 51 and the rear bottom frame 52 in the bottom support component 5; as the front bottom frame 51 is hinged to the bottom of the front frame 1, and the rear bottom frame 52 is hinged to the bottom of the rear frame 2, so when the front bottom frame 51 and the rear bottom frame 52 are folded up and lifted up, it will pull the front frame 1 and the rear frame 2 to converge towards center;
S2. Since the upright rods of the front and rear frames are connected by the side folding component 4, when the front frame 1 and the rear frame 2 converge towards the center, the front upright rods 11 and the rear upright rods 21 will follow and converge towards the center, which will drive the side folding component 4 therebetween to fold, and the X-shaped cross articulation pieces 41 connected sequentially in the side folding component 4 will do the closing motion, which will drive the sliding sleeves 3 on the front upright rods 11 and rear upright rods 21 to slide upwardly;
S3. when the sliding sleeves 3 on the rear upright rods 21 slide upwardly, it will drive the first support rod 62 to follow the movement, and the first support rod 62 will then pull the second support rod 63 and the third support rod 64 close to the rear upright rods 21 to do the closing movement, which will then drive the expansion frame 61 to rotate downward to close, and eventually form the folded state shown in FIG. 8.

Further, in order to facilitate smooth pulling up of the expansion frame 61 to unfold the trailer, as shown in FIG. 3, the second support rod 63 is also provided with a baffle plate 65, which can block and limit the expansion frame 61 when the expansion frame 61 is folded downwards, preventing the expansion frame 61 from being overly closed.

As can be seen, the trailer is structured with the following features:
1. the side folding components 4, bottom support component 5 and expansion component 6 in the trailer can be folded, but folding of the three components are not isolated, but linked to each other, and the trailer as a whole is a linkage structure, the significance of which is that as long as one of the components acts, other components will follow the movement, so that it can greatly improve the smoothness in the entire trailer folding and unfolding process, and is convenient for users to use;
2. in the folding process of the trailer, the front and rear frames as well as front and rear upright rods will not fold, but to approach each other converge toward center, so the size of the components in the side folding components 4, bottom support component 5 and expansion component 6 are designed in advance, so that the components are not higher than the upright rods in the folding process, and can ensure that the height of the trailer is same before and after it is folded, to facilitate storage of the trailer;
3. the trailer is mainly equipped with an expansion component 6 at the rear frame 2, which can increase the unfolding length of the trailer without changing the width of the trailer, thus effectively improving the capacity of the trailer, and can meet the user's large-capacity demand.

### Embodiment 2

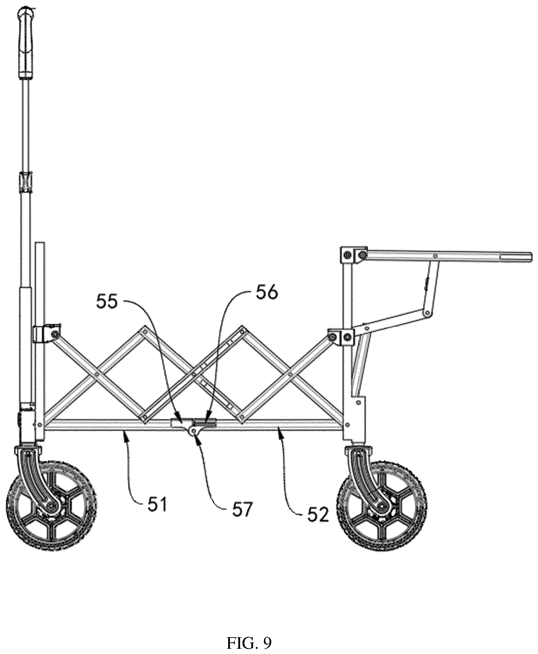

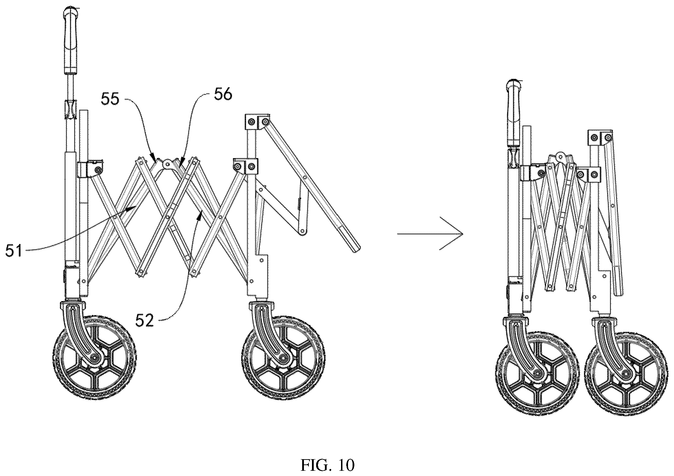

As shown in FIG. 9 and FIG. 10, in embodiment 2, the limiting piece doesn't use the U-shaped hanging rod, but use another structural form. The limiting piece comprises a front hinge base 55 and a rear hinge base 56; the front hinge base 55 is provided at a rear end of the front bottom frame 51, the rear hinge base 56 is provided at a front end of the rear bottom frame 52, at a bottom of the front hinge base 55 and the rear hinge base 56 is provided with a connecting lug 57 respectively, and two connecting lugs 57 are hingedly connected;

As shown in FIG. 9, when the front bottom frame 51 and the rear bottom frame 52 are unfolded downwardly and laid flat, a rear end of the front hinge base 55 and a front end of the rear hinge base 56 are abutted against each other; at this time, the front bottom frame 51 and the rear bottom frame 52 can be limited, so that the two cannot continue to rotate downward, and then it can play the loading function, and this limiting structure is more simple and convenient. As shown in FIG. 10, the folding method in Embodiment 2 is the same as that in Embodiment 1, and will not be repeated.

The invention and its embodiments have been described above, but the description is not limited thereto; only one embodiment of the invention is shown in the drawings, and the actual structure is not limited thereto. In general, it is to be understood by those skilled in the art that non-creative design of structural forms and embodiments that are similar to the technical solutions without departing from the spirit of the invention shall all fall within the protective scope of the invention.

## Claims

1. A folding expansion trailer, comprising
a front frame and a rear frame, wherein the front frame and rear frame are respectively provided with two upright rods distributed at intervals, one at left and another one at right, four upright rods are distributed in a rectangle and each upright rod is equipped with a sliding sleeve that can be slid up and down; the upright rods on the front frame are front upright rods, while the upright rods on the rear frame are rear upright rods;
side folding components, and each side folding component is connected between the front upright rod and rear upright rod at same side; each side folding component comprises a plurality of X-shaped cross articulation pieces which are sequentially articulated in a front-to-back direction, wherein one of the upper and lower ends of the first and last X-shaped cross articulation pieces is hingedly connected to an adjacent upright rod, and another end is hingedly connected to a sliding sleeve on the upright rod herein;
a bottom support component, and the bottom support component comprises a front bottom frame, a rear bottom frame and a limiting piece; the front bottom frame is hinged to a bottom of the front frame and the rear bottom frame is hinged to a bottom of the rear frame, the front bottom frame is hinged with the rear bottom frame, and the limiting piece is used for supporting and limiting the front bottom frame and the rear bottom frame when the front bottom frame and the rear bottom frame are unfolded downward;
an expansion component, and the expansion component comprises an expansion frame and connecting rod mechanisms, the expansion frame is an open ring-shaped frame with an opening forward, left and right ends of the expansion frame are hingedly connected to two rear upright rods respectively, the connecting rod mechanism is connected to the expansion frame and the sliding sleeve on the rear upright rod respectively, the connecting rod mechanisms are used to synchronously push and pull the expansion frame to unfold upwardly or to fold downwardly when the sliding sleeve on the rear upright rod slides upwardly or downwardly.

2. The folding expansion trailer of claim 1, wherein each connecting rod mechanism comprises a first support rod, a second support rod and a third support rod; one end of the first support rod is hinged to the sliding sleeve on the rear upright rod and another end is hinged rearwardly to a lower end of the second support rod, an upper end of the second support rod is hinged to the expansion frame, and a lower end of the third support rod is hinged to a lower end of the rear upright rod and an upper end thereof is hinged to the first support rod.

3. The folding expansion trailer of claim 2, wherein the second support rod is provided with a baffle plate for limiting the expansion frame when the expansion frame is folded downwards.

4. The folding expansion trailer of claim 1, wherein the limiting piece is a U-shaped hanging rod; the front bottom frame is hinged to the bottom of the front frame, the rear bottom frame is hinged to the bottom of the rear frame, the front bottom frame and the rear bottom frame are hingedly connected to and supported on an upwardly opening U-shaped hanging rod, and left and right ends of the U-shaped hanging rod are hinged upwardly to their respective neighboring X-shaped cross articulation piece.

5. The folding expansion trailer of claim 4, wherein the left and right ends of the U-shaped hanging rod are hinged to a hinge center of the respective X-shaped cross articulation piece directly above them.

6. The folding expansion trailer of claim 1, wherein the limiting piece comprises a front hinge base and a rear hinge base; the front hinge base is provided at a rear end of the front bottom frame, the rear hinge base is provided at a front end of the rear bottom frame, at a bottom of the front hinge base and the rear hinge base is provided with a connecting lug respectively, and two connecting lugs are hingedly connected;
when the front bottom frame and the rear bottom frame are unfolded downwardly and laid flat, a rear end of the front hinge base and a front end of the rear hinge base are abutted against each other.

7. The folding expansion trailer of claim 1, wherein the front bottom frame and the rear bottom frame are provided with a plurality of load-bearing rods.

8. The folding expansion trailer of claim 7, wherein a plurality of load-bearing rods on the front bottom frame and the rear bottom frame are crisscrossed so as to cause the front bottom frame and the rear bottom frame to form a grid frame.

9. The folding expansion trailer of claim 1, wherein the front frame is provided with a vertically retractable puller, wherein a bottom of the puller is hingedly connected to the front frame, the front frame is provided with a ferrule with an opening at a front side, and the puller is vertically stuck in the ferrule.

10. The folding expansion trailer of claim 9, wherein tops of two front upright rods are connected to a horizontal stopper bar, and the stopper bar is abutted against a rear of the handle when the puller is stuck within the ferrule.

11. The folding expansion trailer of claim 1, wherein wheels are provided at bottoms of the front frame and rear frame respectively.
